# EUROPÄISCHE PATENTSCHRIFT

(11) **EP 4 241 367 B1**
(45) Veröffentlichungstag und Bekanntmachung des Hinweises auf die Patenterteilung: **28.05.2025**
(21) Anmeldenummer: 21799026.6
(22) Anmeldetag: 25.10.2021
(51) Int. Cl.: H02K 1/276

(54) **ROTOR EINER ELEKTRISCHEN MASCHINE MIT MEHRSCHICHTIGER PERMANENTMAGNETANORDNUNG**
ROTOR OF AN ELECTRIC MACHINE WITH MULTILAYERED PERMANENT MAGNET ARRANGEMENT
ROTOR D'UNE MACHINE ÉLECTRIQUE À ENSEMBLE D'AIMANT PERMANENT

(30) Priorität: 09.11.2020 DE 102020214035
(43) Veröffentlichungstag der Anmeldung: 13.09.2023
(73) Patentinhaber: Robert Bosch GmbH, 70442 Stuttgart (DE)
(72) Erfinder: THEISINGER, Peter, 71706 Markgroeningen (DE)
(86) Internationale Anmeldenummer: PCT/EP2021/079484
(87) Internationale Veröffentlichungsnummer: WO 2022/096300

(56) Entgegenhaltungen:
- EP-A1- 3 308 450
- EP-A1- 3 651 316
- DE-A1- 102017 209 247
- GB-A- 2 551 537
- US-A1- 2013 307 363

## Beschreibung

### Stand der Technik

Die vorliegende Erfindung betrifft einen Rotor einer elektrischen Maschine.

Außerdem betrifft die Erfindung eine elektrische Maschine aufweisend einen derartigen Rotor. Der Rotor weist eine mehrschichtige Anordnung von Permanentmagneten auf.

Aus dem Stand der Technik sind elektrische Maschinen bekannt. Diese weisen oftmals einen Rotor auf, in dem Permanentmagnete vorgesehen sind. Diese Permanentmagnete lassen sich in unterschiedlichen Anordnungen innerhalb des Rotors bereitstellen. So ist beispielsweise eine mehrschichtige Anordnung von Permanentmagneten in der Art einer Multi-C-Anordnung mit vier Schichten aus der FR 2 973 179 B1 bekannt. Eine andere ähnliche Anordnung ist aus der US 2013/307363 A1 bekannt.

GB2551537A ist als nächstliegender Stand der Technik angesehen und offenbart die Merkmale der Präambel des unabhängigen Hauptanspruchs 1.

Die Aufgabe der Erfindung ist einen Rotor einer elektrischen Maschine bereit zu stellen, der für die elektrische Maschine ein hohes Drehmoment und eine hohe Leistung bei gleichzeitig bestehender hoher Drehzahlfestigkeit und geringer Drehmomentwelligkeit gewährleistet.

Die erfindungsgemäße Aufgabe wird durch einen Rotor einer elektrischen Maschine gemäß den Merkmalen des unabhängigen Hauptanspruchs 1 gelöst.

Die Unteransprüche zeigen bevorzugte Weiterbildungen der Erfindung.

### Offenbarung der Erfindung

Der erfindungsgemäße Rotor mit den kennzeichnenden Merkmalen des unabhängigen Hauptanspruchs 1 weist eine mehrschichtige Anordnung von Permanentmagneten auf, die eine Steigerung des magnetischen Rotorflusses gegenüber dem Stand der Technik ermöglicht. Gleichzeitig ist die Drehzahlfestigkeit des Rotors erhöht. Weiterhin ermöglicht der Rotor die Reduktion von Magnetverlusten durch Oberschwingungen, wodurch insgesamt die Dauerperformance einer elektrischen Maschine erhöht ist.

Die mehrschichtige Anordnung der Permanentmagnete ist insbesondere nicht durch lediglich viele kleine Permanentmagnete zu realisieren, sondern ermöglicht die Verwendung von größeren Permanentmagneten verglichen mit dem Stand der Technik. Dies führt zu einer höheren Entmagnetisierungsfestigkeit, wodurch höhere Rotortemperaturen tolerierbar sind, ohne das die Performance der elektrischen Maschine negativ beeinflusst wird.

Der Rotor weist einen um eine Rotorachse drehbaren Rotorkörper auf. Der Rotorkörper ist insbesondere durch eine Vielzahl von einzelnen Blechlamellen gebildet, die zu einem Lamellenpaket gestapelt sind. Die einzelnen Blechlamellen sind insbesondere aus Elektroblech gefertigt, besonders bevorzugt ausgestanzte. Der Rotorkörper weist einen Außenumfang und mehrere Rotorpole auf, wobei jeder Rotorpol eine Polmittelachse und eine Anordnung von Innentaschen des Rotorkörpers angeordneten Permanentmagneten aufweist. Die Taschen sind somit bevorzugt in dem Stapel der einzelnen Blechlamellen ausgebildet.

Die Anordnung von Permanentmagneten umfasst zwei in radialer Richtung zueinander beabstandete Schichten mit Permanentmagneten, wobei die radial innere Schicht zwei symmetrisch zur Polmittelachse angeordnete innere Taschen und einen zwischen den beiden inneren Taschen vorgesehen Innensteg aufweist. Die radial äußere Schicht weist eine symmetrisch zur Polmittelachse angeordnete äußere Tasche auf. Die radial äußere Schicht weist somit besonders vorteilhaft eine solche Tasche auf, die tangential zur Polmittelachse ausgebildet ist. Durch eine derartige Anordnung lassen sich insbesondere kritische Ordnungen der Drehmomentwelligkeit signifikant reduzieren.

Erfindungsgemäß ist der Innensteg ein einziger, symmetrisch zur Polmittelachse angeordneter Steg. Somit erstreckt sich der Innensteg vorteilhafterweise entlang der Polmittelachse und trennt somit die beiden inneren Taschen voneinander. Zwischen dem Außenumfang des Rotorkörpers und der äußeren Tasche sind zwei als Flussbarrieren wirkende Zusatztaschen vorgesehen. Die Zusatztaschen sind ebenfalls symmetrisch zur Polmittelachse angeordnet. Jede Zusatztasche bildet einen ersten Außensteg zwischen der Zusatztasche und der äußeren Tasche. Somit sind zwei erste Außenstege vorhanden, zwischen denen sich die äußere Tasche befindet. Eine solche Anordnung von Taschen und Stegen wird im Folgenden auch C-Minus-Anordnung bezeichnet. Dies folgt insbesondere daraus, dass die Permanentmagnete der radial inneren Schicht C-förmig angeordnet sind, während die radial äußere Schicht insbesondere die Form eines Minus aufweist.

Der beschriebene Rotor eignet sich insbesondere zum Einsatz in elektrischen Maschinen für Hybridfahrzeuge oder Elektrofahrzeuge und ist insbesondere in permanenterregten Synchronmaschinen einsetzbar. Wird der Rotor in solchen elektrischen Maschinen verwendet, so lassen sich hohe Drehmomente und hohe Leistungen erreichen, wobei gleichzeitig eine hohe Drehzahlfestigkeit vorhanden ist. Die Anordnung ermöglicht weiterhin eine hohe Entmagnetisierungsfestigkeit der verwendeten Permanentmagnete, wodurch eine Rotorgrenztemperatur erhöht ist. Dies führt insbesondere zu besagter hoher Dauerperformance der elektrischen Maschine. Weiterhin ermöglicht die Anordnung der Permanentmagneten, insbesondere die Anordnung in der radial äußeren Schicht, eine geringe Drehmomentenwelligkeit. Weitere Vorteile der genannten Anordnung sind niedrige Verluste, insbesondere niedrige Eisenverluste und Magnetverluste sowie niedrige Materialkosten und Herstellungskosten.

Besonders bevorzugt ist vorgesehen, dass jede Zusatztasche zusätzlich einen zweiten Außensteg zwischen dem Außenumfang des Rotorkörpers und der Zusatztasche bildet. Somit ist die Zusatztasche durch den ersten Außensteg und den zweiten Außensteg begrenzt und weist somit zumindest in der Ebene senkrecht zur Rotationsachse einen geschlossenen Querschnitt auf. Die Zusatztasche bleibt vorteilhafterweise leer und ist somit lediglich mit Umgebungsluft gefüllt. Auf diese Weise wirkt die Zusatztasche als Flussbarriere, während die zweiten Außenstege eine hohe Drehmomentfestigkeit des Rotors sicherstellen.

In einer alternativen, nicht dargestellten Ausgestaltung ist bevorzugt vorgesehen, dass die Zusatztaschen im Stapel von Blechlamellen zum Außenumfang hin offen ausgebildet sind. Somit sind die zuvor beschriebenen zweiten Außenstege insbesondere nicht vorhanden. Die Zusatztaschen sind in diesem Fall vorteilhafterweise mit einer magnetisch nicht leitfähigen Masse aufgefüllt. Durch die magnetisch nicht leitfähige Masse ist insbesondere eine mechanische Stabilität des Rotors erhöht, wodurch die entsprechende Zusatztasche einerseits als Flussbarriere wirkt, andererseits die Drehzahlfestigkeit des Rotors sicherstellt.

Vorteilhafterweise ist in jeder inneren Tasche und/oder in jeder äußeren Tasche in axialer Richtung eine Vielzahl von Permanentmagneten hintereinander angeordnet. Somit ist die axiale Abmessung jedes Permanentmagnets nicht zwingend identisch zur axialen Abmessung des Rotorkörpers. Vielmehr lassen sich in axialer Richtung mehrere Permanentmagnete hintereinander anordnen, um die inneren Taschen und/oder äußeren Taschen aufzufüllen.

Erfindungsgemäß ist vorgesehen, dass jeweils zwei Permanentmagnete der radial inneren Schicht bezüglich der Polmittelachse symmetrisch angeordnet sind und jeweils einen spitzen Öffnungswinkel αᵢ₁, αᵢ₂ zueinander einschließen. Dies bedeutet, dass die Permanentmagnete zueinander einen Winkel einnehmen, der kleiner als 180° ist. Die beiden ersten Außenstege der radial äußeren Schicht schließen einen spitzen Stegwinkel βₛₐ zueinander ein. Erfindungsgemäß ist ferner vorgesehen, dass der Öffnungswinkel αᵢ₁, αᵢ₂ jedes Paares von symmetrisch angeordneten Permanentmagneten der radial inneren Schicht größer ist als der Stegwinkel βₛₐ zwischen den ersten Außenstegen. Dies führt insbesondere zu einem optimierten Magnetfluss innerhalb des Rotors, wodurch sich hohe Leistungen der den Rotor verwendenden elektrischen Maschine bei gleichzeitig hoher Drehmomentfestigkeit erreichen lassen.

Vorteilhafterweise ist außerdem vorgesehen, dass der Innensteg jedes Rotorpols eine in Umfangsrichtung des Rotors gemessene Breite bₛᵢ aufweist. Die ersten Außenstege jedes Rotorpols weisen eine Umfangsrichtung des Rotors gemessene Breite bₛₐ auf. Es ist vorteilhafterweise vorgesehen, dass die Breite bₛᵢ des Innenstegs größer ausgebildet ist, als die Breite bₛₐ der ersten Außenstege. Somit erfolgt eine optimale Auslegung der jeweiligen Stege in Abhängigkeit der zu tragenden Kräfte sowie optimiert für einen maximalen magnetischen Rotorflusspunkt insbesondere lassen sich Streuflüsse minimieren.

Zwischen den ersten Außenstegen jeder äußeren Tasche ist bevorzugt ein einziger Permanentmagnet angeordnet. Dies gilt insbesondere innerhalb der Ebene senkrecht zur Rotationsachse, sodass weiterhin möglich ist, mehrere Permanentmagnete in axialer Richtung zu stapeln.

In jeder der beiden inneren Taschen sind bevorzugt jeweils zwischen dem Innensteg und dem Außenumfang des Rotorkörpers zumindest zwei nebeneinanderliegende Permanentmagnete angeordnet. Dies gilt wiederrum bevorzugt in der Ebene senkrecht zur Rotationsachse, sodass weiterhin ermöglicht ist, mehrere Permanentmagnete axial zu stapeln. Die beiden Permanentmagnete pro innere Tasche sind insbesondere derart angeordnet, dass diese den Permanentmagneten in der äußeren Tasche zumindest teilweise umgreifen. Somit ist insbesondere die zuvor beschriebene C-Minus-Anordnung auf einfache Art erreicht.

Die beiden inneren Taschen sind bevorzugt jeweils derart abgeknickt ausgebildet, dass die Permanentmagnete jeder inneren Tasche unterschiedliche Winkel zur Polmittelachse aufweisen. Auf diese Weise ist insbesondere die zuvor beschriebene C-Form realisiert. Die Anordnung der Permanentmagnete und die Montage des Rotors ist somit vereinfacht.

Bevorzugt weisen die Magnete jedes Rotorpols insbesondere die Magnete des gesamten Rotors, identische Abmessungen auf. Somit ist die Bereitstellung der Permanentmagnete einfach und aufwandsarm ermöglicht. Außerdem ist die Montage des Rotors vereinfacht, da in jeder zur Montage von Magneten vorgesehen Position ein identischer Permanentmagnet verwendet werden kann.

Die Erfindung betrifft außerdem eine elektrische Maschine nach Anspruch 9. Die elektrische Maschine weist einen Rotor wie zuvor beschrieben auf. Außerdem weist die elektrische Maschine einen Stator zum Antreiben des Rotors auf. Die Verwendung des Rotors wie zuvor beschrieben führt insbesondere zu den zuvor genannten vorteilhaften Eigenschaften der elektrischen Maschine.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:

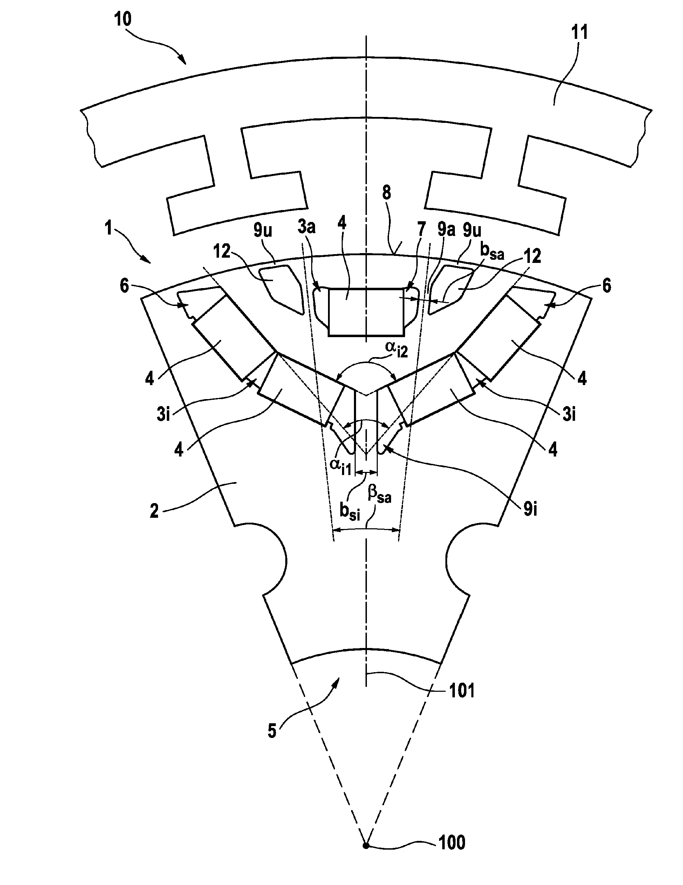

- Figur 1: schematische Abbildung einer elektrischen Maschine gemäß einem Ausführungsbeispiel der Erfindung

Die Figur 1 zeigt schematisch eine elektrische Maschine 10 gemäß einem Ausführungsbeispiel der Erfindung. Die elektrische Maschine 10 weist einen Stator 11 sowie einen Rotor 1 auf. Der Stator 11 dient zum Antreiben des Rotors 1. Die Darstellung in Figur 1 erfolgt lediglich für einen einzelnen Rotorpol 5 des Rotors 1, wobei die restliche Anordnung von Rotor 1 und/oder Stator 11 bevorzugt symmetrisch zu dem gezeigten Ausschnitt ist.

Der Rotor 1 weist einen Rotorkörper 2 auf, der um eine Rotationsachse 100 rotierbar ausgebildet ist. Der Rotorkörper 2 ist bevorzugt aus einer Vielzahl von gestapelten Blechlamellen gebildet. Die Blechlamellen sind beispielsweise aus Elektroblech gestanzt.

Der Rotorkörper 2 weist einen Außenumfang 8 sowie eine Vielzahl von Magnettaschen 6, 7 auf. Der Rotorkörper 2 bildet außerdem mehrere Rotorpole 5, wobei, wie zuvor beschrieben, in Figur 1 lediglich einer dieser Rotorpole 5 gezeigt ist. Besagter Rotorpol 5 wiederum weist eine Polmittelachse 101 auf, wobei der Rotorpol 5 symmetrisch zu dieser Polmittelachse 101 ausgebildet ist.

Jeder Rotorpol 5 weist eine mehrschichtige Anordnung von Permanentmagneten 4 auf, wobei einerseits Permanentmagnete 4 einer radial inneren Schicht 3i und Permanentmagnete 4 einer radial äußeren Schicht 3a vorgesehen sind. Die radial innere Schicht 3i ist von der radial äußeren Schicht 3a in Radialrichtung beabstandet angeordnet. Die radial innere Schicht 3i weist zwei symmetrisch zur Polmittelachse 101 angeordnete innere Taschen 6 auf. Zwischen den beiden inneren Taschen 6 ist ein Innensteg 9i vorgesehen. Der Innensteg 9i ist ein einziger, symmetrisch zur Polmittelachse 101 angeordneter Steg.

Die radial äußere Schicht 3a weist eine symmetrisch zur Polmittelachse 101 angeordnete äußere Tasche 7 auf. Außerdem ist vorgesehen, dass zwischen dem Außenumfang 8 des Rotorkörpers 2 und der äußeren Tasche 7 zwei als Flussbarriere wirkende, symmetrisch zur Polmittelachse 101 angeordnet Zusatztaschen 12 vorgesehen sind. Zwischen der Zusatztasche 12 und der äußeren Tasche 7 ist jeweils ein erster Außensteg 9a angeordnet. Zwischen jeder Zusatztasche 12 und dem Außenumfang 8 des Rotorkörpers 2 ist außerdem jeweils ein zweiter Außensteg 9u vorgesehen. Somit ist ein Querschnitt der Zusatztaschen 12 zumindest bezüglich der Ebene senkrecht zur Rotationsachse 100 geschlossen ausgebildet. Es sind aber auch alternative, nicht dargestellte Ausgestaltungen möglich, wie insbesondere die Ausbildung der Zusatztaschen 12 mit offenem Querschnitt, bei der die Zusatztaschen 12 zum Außenumfang 8 hin offen ausgebildet sind. In diesem Fall sind die Zusatztaschen 12 zur Erhöhung der mechanischen Festigkeit vorteilhafterweise mit einem magnetisch nicht leitfähigem Material gefüllt. Eine entsprechende Füllung abgesehen von Luft ist in der Figur 1 gezeigten Ausgestaltung nicht notwendig, vielmehr ist hier vorgesehen, dass die Zusatztasche 12 frei bleibt und somit lediglich mit Umgebungslust aufgefüllt ist. In diesem Fall ist die Wirkung als Flussbarriere einfach und aufwandsarm erreicht.

In der äußeren Tasche 7 ist zwischen den beiden ersten Außenstegen 9a lediglich ein Permanentmagnet 4 angebracht. Dies bezieht sich insbesondere auf die Ebene senkrecht zur Rotationsachse 100, da vorteilhafterweise in axialer Richtung bezüglich der Rotationsachse 100 mehrere Permanentmagnete 4 gestapelt werden können.

In jeder inneren Tasche 6 sind zwischen Innensteg 9i und dem Außenumfang 8 des Rotorkörpers 2 bevorzugt jeweils zwei Permanentmagnete 4 angeordnet. Auch dies bezieht sich insbesondere auf die Ebene senkrecht zur Rotationsachse, da auch hier in axialer Richtung bezüglich der Rotationsachse 100 mehrere Permanentmagnete 4 gestapelt werden können.

Jede innere Tasche 6 ist bevorzugt abgewinkelt ausgebildet, sodass jeder Permanentmagnet 4 der inneren Tasche 6 einen anderen Winkel zur Polmittelachse 101 aufweist. Durch die symmetrische Ausgestaltung der beiden inneren Taschen 6 eines Rotorpols 5 bezüglich der Polmittelachse 101 ist somit erreicht, dass jeweils zwei Permanentmagnete 4 jeder inneren Tasche 6 symmetrisch zueinander angeordnet sind. Jedes dieser Paare von symmetrisch angeordneten Permanentmagneten 4 bildet einen spitzen Öffnungswinkel αᵢ₁ und αᵢ₂. In Figur 1 bilden die radial weiter innen gelegenen symmetrisch angeordneten Permanentmagnete 4 den spitzen Öffnungswinkel αᵢ₂ während die beiden radial weiter außen gelegenen Permanentmagnete 4 der inneren Taschen 6 den spitzen Öffnungswinkel αᵢ₁ bilden. Auch die beiden ersten Außenstege 9a der radial äußeren Schicht 3a bilden einen spitzen Winkel, den spitzen Stegwinkel βₛₐ.

Es ist vorgesehen, dass jeder Öffnungswinkel αᵢ₁ und αᵢ₂ größer ist als der Stegwinkel βₛₐ. Auf diese Weise lassen sich die magnetischen Flüsse innerhalb des Rotors 1 optimieren, um eine Performance der elektrischen Maschine 10 zu maximieren.

Des Weiteren ist vorgesehen, dass der Innensteg 9i eine in Umfangsrichtung des Rotors 1 gemessene Breite bₛᵢ aufweist. Die ersten Außenstege 9a weisen eine in Umfangsrichtung des Rotors 1 gemessene Breite bₛₐ auf. Hier ist vorgesehen, dass die Breite bₛᵢ des Innenstegs 9i größer ausgebildet ist als die Breite bₛₐ der ersten Außensteges 9a. Somit sind die Größen der entsprechenden Stege 9i, 9a hinsichtlich vorhandener Kraftverhältnisse optimiert, wobei die Ausbildung von Streuflüssen minimiert ist.

Die zuvor beschriebene Ausbildung der radial inneren Schicht 3i und der radial äußeren Schicht 3a ermöglicht die Bereitstellung der Permanentmagnete 4 in einer C-Minus-Anordnung, wobei diese Anordnung einfach und aufwandsarm erreichbar ist. So ist insbesondere vorgesehen, dass sämtliche im Rotorpol 5 vorgesehen Permanentmagnete 4 identische Abmessungen aufweisen. Dies vereinfacht die Montage des Rotors 1, da keinerlei Zuordnungen von Permanentmagneten 4 zu bestimmten Positionen zu beachten sind. Gleichzeitig ermöglicht die C-Minus-Anordnung einen optimierten Rotorfluss bei erhöhter Drehmomentfestigkeit. Somit ist einerseits ein hohes Drehmoment und eine hohe Leistung ermöglicht. Andererseits sind aufgrund der Möglichkeit größere Permanentmagnete 4 zu verwenden, eine Entmagnetisierungsfestigkeit der Permanentmagnete 4 und damit eine Rotorgrenztemperatur erhöht. Somit ist eine Dauerperformance der elektrischen Maschine 10 erhöht. Durch die zuvor beschrieben einfache Anordnung lassen sich außerdem Herstellungskosten und Materialkosten minimieren.

## Patentansprüche

1. Rotor (1) einer elektrischen Maschine (10), umfassend einen um eine Rotorachse (100) rotierbaren Rotorkörper (2), der einen Außenumfang (8) und mehrere Rotorpole (5) aufweist und durch einen Stapel von Blechlamellen gebildet ist, wobei jeder Rotorpol (5) eine Polmittelachse (101) und eine Anordnung von in Taschen (6, 7) des Rotorkörpers (2), insbesondere des Stapels von Blechlamellen, angeordneten Permanentmagneten (4) aufweist, wobei die Anordnung von Permanentmagneten (4) zwei in radialer Richtung zueinander beanstandete Schichten (3i, 3a) mit Permanentmagneten (4) umfasst, wobei die radial innere Schicht (3i) zwei symmetrisch zur Polmittelachse (101) angeordnete innere Taschen (6) und einen zwischen den beiden inneren Taschen (6) liegenden Innensteg (9i) aufweist, wobei die radial äußere Schicht (3a) eine symmetrisch zur Polmittelachse (101) angeordnete äußere Tasche (7) aufweist,
wobei der Innensteg (9i) ein einziger, symmetrisch zur Polmittelachse (101) angeordneter Steg ist, wobei
zwischen dem Außenumfang (8) des Rotorkörpers (2) und der äußeren Tasche (7) zwei als Flussbarriere wirkende, symmetrisch zur Polmittelachse (101) angeordnete Zusatztaschen (12) vorgesehen sind, wobei
jede Zusatztasche (12) einen ersten Außensteg (9a) zwischen der Zusatztasche (12) und der äußeren Tasche (7) bildet,
wobei jeweils zwei Permanentmagnete (4) der radial inneren Schicht (3i) bezüglich der Polmittelachse (101) symmetrisch angeordnet sind und jeweils einen spitzen Öffnungswinkel *αᵢ₁, αᵢ₂* einschließen, wobei die beiden ersten Außenstege (9a) der radial äußeren Schicht (3a) einen spitzen Stegwinkel *βₛₐ* einschließen,
**dadurch gekennzeichnet, dass**
in jeder der beiden inneren Taschen (6) jeweils zwischen dem Innensteg (9i) und dem Außenumfang (8) des Rotorkörpers (2) zumindest zwei nebeneinander liegende Permanentmagnete (4) angeordnet sind, dass
der Öffnungswinkel *αᵢ₁, αᵢ₂* jedes Paares von symmetrisch angeordneten Permanentmagneten (4) der radial inneren Schicht (3i) größer ist als der Stegwinkel *βₛₐ* zwischen den ersten Außenstegen (9a), und dass
der spitze Stegwinkel *βₛₐ* zum Außenumfang (8) des Rotorkörpers (2) hin geöffnet ist.

2. Rotor nach Anspruch 1, **dadurch gekennzeichnet, dass** jede Zusatztasche (12) zusätzlich einen zweiten Außensteg (9u) zwischen dem Außenumfang (8) des Rotorkörpers (2) und der Zusatztasche (12) bildet.

3. Rotor nach Anspruch 1, **dadurch gekennzeichnet, dass** die Zusatztaschen (12) im Stapel von Blechlamellen zum Außenumfang (8) hin offen ausgebildet und mit einer magnetisch nicht leitfähigen Masse ausgefüllt sind.

4. Rotor nach einem der vorhergehenden Ansprüche, **dadurch gekennzeichnet, dass** in jeder inneren Tasche (6) und/oder äußeren Tasche (7) in axialer Richtung bezüglich der Rotorachse mehrere Permanentmagnete (4) hintereinander angeordnet sind.

5. Rotor (1) nach einem der vorhergehenden Ansprüche, **dadurch gekennzeichnet, dass** der Innensteg (9i) jedes Rotorpols (5) eine in Umfangsrichtung des Rotors (1) gemessene Breite *bₛᵢ* und die ersten Außenstege (9a) jedes Rotorpols (5) eine in Umfangsrichtung des Rotors (1) gemessene Breite *bₛₐ* aufweisen, wobei die Breite *bₛᵢ* des Innenstegs (9i) größer ausgebildet ist als die Breite *bₛₐ* der ersten Außenstege (9a).

6. Rotor (1) nach einem der vorhergehenden Ansprüche, **dadurch gekennzeichnet, dass** zwischen den ersten Außenstegen (9a) jeder äußeren Tasche (7) ein einziger Permanentmagnet (4) angeordnet ist.

7. Rotor (1) nach einem der vorhergehenden Ansprüche, **dadurch gekennzeichnet, dass** die beiden inneren Taschen (6) jeweils derart abgeknickt ausgebildet sind, dass die Permanentmagnete (4) jeder inneren Tasche (6) unterschiedliche Winkel zu der Polmittelachse (101) aufweisen.

8. Rotor (1) nach einem der vorhergehenden Ansprüche, **dadurch gekennzeichnet, dass** die Permanentmagnete (4) jedes Rotorpols (5) identische Abmessungen aufweisen.

9. Elektrische Maschine (10) aufweisend einen Rotor (1) nach einem der vorhergehenden Ansprüche sowie einen Stator (11) zum Antreiben des Rotors (1).

## Claims

1. Rotor (1) of an electric machine (10), comprising a rotor body (2) which can be rotated about a rotor axis (100), has an outer circumference (8) and a plurality of rotor poles (5) and is formed by a stack of laminations, wherein each rotor pole (5) has a pole central axis (101) and an arrangement of permanent magnets (4) arranged in pockets (6, 7) of the rotor body (2), in particular the stack of laminations,
wherein the arrangement of permanent magnets (4) comprises two layers (3i, 3a) spaced apart from each other in the radial direction and having permanent magnets (4), wherein the radially inner layer (3i) has two inner pockets (6) arranged symmetrically with respect to the pole central axis (101) and an inner connecting portion (9i) situated between the two inner pockets (6), wherein the radially outer layer (3a) has an outer pocket (7) arranged symmetrically with respect to the pole central axis (101),
wherein the inner connecting portion (9i) is a single connecting portion arranged symmetrically with respect to the pole central axis (101), wherein
two additional pockets (12) acting as a flux barrier and arranged symmetrically with respect to the pole central axis (101) are provided between the outer circumference (8) of the rotor body (2) and the outer pocket (7), wherein
each additional pocket (12) forms a first outer connecting portion (9a) between the additional pocket (12) and the outer pocket (7),
wherein in each case two permanent magnets (4) of the radially inner layer (3i) are arranged symmetrically with respect to the pole central axis (101) and each include an acute opening angle *αᵢ₁*, *αᵢ₂*, wherein the two first outer connecting portions (9a) of the radially outer layer (3a) include an acute connecting portion angle *βₛₐ* ,
**characterized in that**
at least two permanent magnets (4) situated next to each other are arranged in each of the two inner pockets (6) in each case between the inner connecting portion (9i) and the outer circumference (8) of the rotor body (2), **in that**
the opening angle *αᵢ₁*, *α*ᵢ₂ of each pair of symmetrically arranged permanent magnets (4) of the radial inner layer (3i) is greater than the connecting portion angle *βₛₐ* between the first outer connecting portions (9a), and **in that**
the acute connecting portion angle *βₛₐ* is open to the outer circumference (8) of the rotor body (2).

2. Rotor according to Claim 1, **characterized in that** each additional pocket (12) additionally forms a second outer connecting portion (9u) between the outer circumference (8) of the rotor body (2) and the additional pocket (12).

3. Rotor according to Claim 1, **characterized in that** the additional pockets (12) in the stack of laminations are designed to be open to the outer circumference (8) and filled with a magnetically non-permeable compound.

4. Rotor according to any of the preceding claims, **characterized in that** a plurality of permanent magnets (4) are arranged one behind the other in the axial direction with respect to the rotor axis in each inner pocket (6) and/or outer pocket (7).

5. Rotor (1) according to any of the preceding claims, **characterized in that** that the inner connecting portion (9i) of each rotor pole (5) has a width *bₛᵢ* measured in the circumferential direction of the rotor (1) and the first outer connecting portions (9a) of each rotor pole (5) have a width *bₛₐ* measured in the circumferential direction of the rotor (1), wherein the width *bₛᵢ* of the inner connecting portion (9i) is greater than the width *bₛₐ* of the first outer connecting portions (9a).

6. Rotor (1) according to any of the preceding claims, **characterized in that** a single permanent magnet (4) is arranged between the first outer connecting portions (9a) of each outer pocket (7).

7. Rotor (1) according to any of the preceding claims, **characterized in that** the two inner pockets (6) are each designed bent in such a way that the permanent magnets (4) of each inner pocket (6) are at different angles in relation to the pole central axis (101).

8. Rotor (1) according to any of the preceding claims, **characterized in that** the permanent magnets (4) of each rotor pole (5) have identical dimensions.

9. Electric machine (10) comprising a rotor (1) according to any of the preceding claims and a stator (11) for driving the rotor (1).

## Revendications

1. Rotor (1) d'une machine électrique (10), comprenant un corps de rotor (2) pouvant tourner autour d'un axe de rotor (100), qui présente une circonférence extérieure (8) et plusieurs pôles de rotor (5) et est formé par un empilement de lamelles de tôle, dans lequel chaque pôle de rotor (5) présente un axe central de pôle (101) et un agencement d'aimants permanents (4) disposés dans des poches (6, 7) du corps de rotor (2), en particulier de l'empilement de lamelles de tôle,
dans lequel l'agencement d'aimants permanents (4) comprend des couches (3i, 3a) pourvues d'aimants permanents (4), espacées l'une par rapport à l'autre dans la direction radiale, dans lequel la couche radialement intérieure (3i) présente deux poches intérieures (6) disposées de manière symétrique à l'axe central de pôle (101) et une entretoise intérieure (9i) située entre les deux poches intérieures (6), dans lequel la couche radialement extérieure (3a) présente une poche extérieure (7) disposée de manière symétrique à l'axe central de pôle (101),
dans lequel l'entretoise intérieure (9i) est une seule entretoise disposée de manière symétrique à l'axe central de pôle (101), dans lequel
deux poches supplémentaires (12) servant de barrière d'écoulement, disposées de manière symétrique à l'axe central de pôle (101), sont prévues entre la circonférence extérieure (8) du corps de rotor (2) et la poche extérieure (7), dans lequel
chaque poche supplémentaire (12) constitue une première entretoise extérieure (9a) entre la poche supplémentaire (12) et la poche extérieure (7),
dans lequel respectivement deux aimants permanents (4) de la couche radialement intérieure (3i) sont disposées de manière symétrique par rapport à l'axe central de pôle (101) et forment respectivement un angle d'ouverture aigu *αᵢ₁*, *αᵢ₂*, dans lequel les deux premières entretoises extérieures (9a) de la couche radialement extérieure (3a) forment un angle d'entretoise aigu *βₛₐ*,
**caractérisé en ce que**
dans chacune des deux poches intérieures (6), respectivement entre l'entretoise intérieure (9i) et la circonférence extérieure (8) du corps de rotor (2), au moins deux aimants permanents adjacents (4) sont disposés, **en ce que**
l'angle d'ouverture *αᵢ₁*, *α*ᵢ₂ de chaque paire d'aimants permanents (4), disposés de manière symétrique, de la couche radialement intérieure (3i) est supérieur à l'angle d'entretoise *βₛₐ* entre les premières entretoises extérieures (9a), et **en ce que**
l'angle d'entretoise aigu *βₛₐ* est ouvert vers la circonférence extérieure (8) du corps de rotor (2).

2. Rotor selon la revendication 1, **caractérisé en ce que** chaque poche supplémentaire (12) forme en plus une deuxième entretoise extérieure (9u) entre la circonférence extérieure (8) du corps de rotor (2) et la poche supplémentaire (12).

3. Rotor selon la revendication 1, **caractérisé en ce que** les poches supplémentaires (12) dans l'empilement de lamelles de tôle sont réalisées pour être ouvertes vers la circonférence extérieure (8) et remplies d'une masse magnétiquement non conductrice.

4. Rotor selon l'une quelconque des revendications précédentes, **caractérisé en ce que** dans chaque poche intérieure (6) et/ou chaque poche extérieure (7), plusieurs aimants permanents (4) sont disposés les uns après les autres dans la direction axiale par rapport à l'axe de rotor.

5. Rotor (1) selon l'une quelconque des revendications précédentes, **caractérisé en ce que** l'entretoise intérieure (9i) de chaque pôle de rotor (5) présente une largeur *bₛᵢ* mesurée dans la direction circonférentielle du rotor (1), et les premières entretoises extérieures (9a) de chaque pôle de rotor (5) présentent une largeur *bₛₐ* mesurée dans la direction circonférentielle du rotor (1), la largeur *bₛᵢ* de l'entretoise intérieure (9i) étant réalisée plus grande que la largeur *bₛₐ* des premières entretoises extérieures (9a).

6. Rotor (1) selon l'une quelconque des revendications précédentes, **caractérisé en ce qu'**un seul aimant permanent (4) est disposé entre les premières entretoises extérieures (9a) de chaque poche (7).

7. Rotor (1) selon l'une quelconque des revendications précédentes, **caractérisé en ce que** les deux poches intérieures (6) sont respectivement réalisées de manière coudée de telle sorte que les aimants permanents (4) de chaque poche intérieure (6) présentent des angles différents par rapport à l'axe central de pôle (101).

8. Rotor (1) selon l'une quelconque des revendications précédentes, **caractérisé en ce que** les aimants permanents (4) de chaque pôle de rotor (5) présentent de dimensions identiques.

9. Machine électrique (10), présentant un rotor (1) selon l'une quelconque des revendications précédentes ainsi qu'un stator (11) pour entraîner le rotor (1).
